# EUROPEAN PATENT APPLICATION

(11) **EP 2 458 349 A1**
(43) Date of publication of application: **30.05.2012**
(21) Application number: 11189439.0
(22) Date of filing: 16.11.2011
(51) Int. Cl.: G01H 9/00, G01D 11/24

(54) **Sensor probe and method of assembling a sensor probe**

(30) Priority: 22.11.2010 US 951420
(71) Applicant: General Electric Company, Schenectady, NY 12345 (US)
(72) Inventor: Jensen, Raymond, Minden, NV Nevada 89423 (US); Sheikman, Boris Leonid, Minden, NV Nevada 89423 (US)
(74) Representative: Bedford, Grant Richard

(57) **Abstract**

A method (400) of assembling a sensor probe includes positioning (402) an emitter within a probe cap, wherein the emitter is configured to generate an electromagnetic field from at least one microwave signal. An inner sleeve is coupled (406) to the probe cap and an outer sleeve is coupled (408) to the inner sleeve.

## Description

The present application relates generally to power systems and, more particularly, to a sensor assembly and methods of assembling a sensor probe.

Known machines may exhibit vibrations and/or other abnormal behavior during operation. One or more sensors may be used to measure and/or monitor machine operation and to determine, for example, an amount of vibration exhibited in a machine drive shaft, a rotational speed of the machine drive shaft, and/or any other suitable operational characteristic of an operating machine or motor. Often, known sensors are coupled to a machine monitoring system that includes a plurality of monitors. The monitoring system receives signals representative of measurements from one or more sensors, performs at least one processing step on the signals, and then transmits the modified signals to a diagnostic platform that displays the measurements to a user.

At least some known machines use one or more proximity sensors and/or sensor probes to measure a vibration and/or a position of a machine component. Known proximity sensors are typically manufactured as a single integrated component, for example, using an injection molding process. More specifically, in at least some known sensors, a probe tip is injection molded such that the tip includes one or more sensing elements that are encapsulated therein. However, such a fabrication process may be expensive and/or may involve complicated manufacturing steps and/or machinery. Moreover, because the unit is an integrated component, if one element of the proximity sensor is faulty or damaged, the entire sensor may need to be replaced.

In one embodiment of the present invention, a method of assembling a sensor probe is provided that includes positioning an emitter within a probe cap, wherein the emitter is configured to generate an electromagnetic field from at least one microwave signal. An inner sleeve is coupled to the probe cap and an outer sleeve is coupled to the inner sleeve.

In another embodiment, a sensor probe is provided that includes an emitter configured to generate an electromagnetic field from at least one microwave signal, a probe cap sized to receive the emitter, an inner sleeve coupled to the probe cap, and an outer sleeve coupled to the inner sleeve.

In yet another embodiment, a sensor assembly is provided that includes at least one probe. The at least one probe includes an emitter configured to generate an electromagnetic field from at least one microwave signal, a probe cap sized to receive the emitter, an inner sleeve coupled to the probe cap, and an outer sleeve coupled to the inner sleeve. The microwave sensor assembly also includes a signal processing device coupled to the at least one probe. The signal processing device is configured to generate a proximity measurement based on a loading induced to the emitter.

Various aspects and embodiments of the present invention will now be described in connection with the accompanying drawings, in which:
Fig. 1 is a block diagram of an exemplary power system.
Fig. 2 is a block diagram of an exemplary sensor assembly that may be used with the power system shown in Fig. 1.
Fig. 3 is a cross-sectional view of an exemplary probe that may be used with the sensor assembly shown in Fig. 2.
Fig. 4 is a flow diagram of an exemplary method of assembling a microwave sensor probe that may be used with the probe shown in Fig. 3.

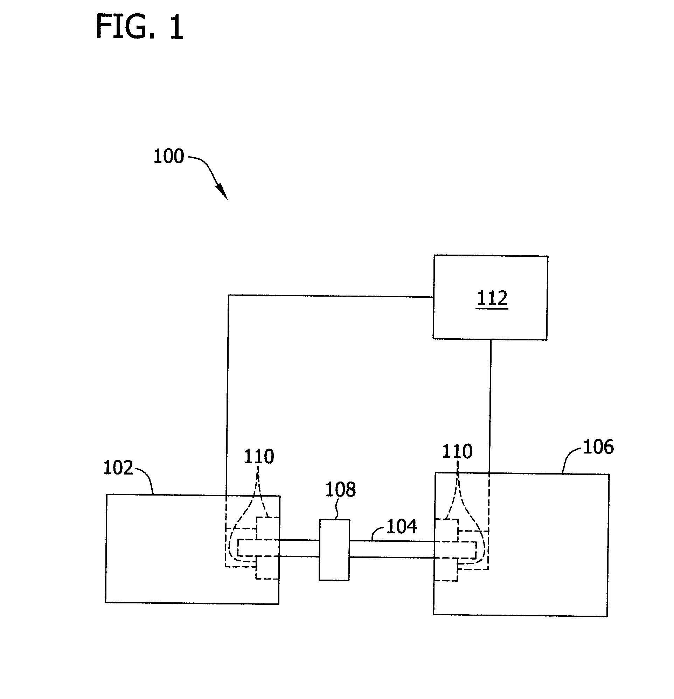

Fig. 1 shows an exemplary power system 100 that includes a machine 102. In the exemplary embodiment, machine 102 may be, but is not limited to only being, a wind turbine, a hydroelectric turbine, a gas turbine, or a compressor. Alternatively, machine 102 may be any other machine used in a power system. In the exemplary embodiment, machine 102 rotates a drive shaft 104 that is coupled to a load 106, such as a generator.

In the exemplary embodiment, drive shaft 104 is at least partially supported by one or more bearings (not shown) housed within machine 102 and/or within load 106. Alternatively or additionally, the bearings may be housed within a separate support structure 108, such as a gearbox, or within any other structure or component that enables power system 100 to function as described herein.

In the exemplary embodiment, power system 100 includes at least one sensor assembly 110 that measures and/or monitors at least one operating condition of machine 102, of drive shaft 104, of load 106, and/or of any other component of power system 100 that enables system 100 to function as described herein. More specifically, in the exemplary embodiment, sensor assembly 110 is a proximity sensor assembly 110 that is positioned in close proximity to drive shaft 104 for measuring and/or monitoring a distance (not shown in Fig. 1) defined between drive shaft 104 and sensor assembly 110. Moreover, in the exemplary embodiment, sensor assembly 110 uses microwave signals to measure a proximity of a component of power system 100 with respect to sensor assembly 110. As used herein, the term "microwave" refers to a signal or a component that receives and/or transmits signals having one or more frequencies between about 300 Megahertz (MHz) and about 300 Gigahertz (GHz). Alternatively, sensor assembly 110 may measure and/or monitor any other component of power system 100, and/or may be any other sensor or transducer assembly that enables power system 100 to function as described herein. In the exemplary embodiment, each sensor assembly 110 is positioned in any location within power system 100. Moreover, in the exemplary embodiment, at least one sensor assembly 110 is coupled to a diagnostic system 112 for use in processing and/or analyzing one or more signals generated by sensor assemblies 110.

During operation, in the exemplary embodiment, the operation of machine 102 may cause one or more components of power system 100, such as drive shaft 104, to change position with respect to at least one sensor assembly 110. For example, vibrations may be induced to the components and/or the components may expand or contract as the operating temperature within power system 100 changes. In the exemplary embodiment, sensor assemblies 110 measure and/or monitor the proximity, the position, and/or the amount of vibration of the components relative to each sensor assembly 110 and transmit a signal representative of the measured proximity, position, and/or amount of vibration of the components (hereinafter referred to as a "proximity measurement signal") to diagnostic system 112 for processing and/or analysis.

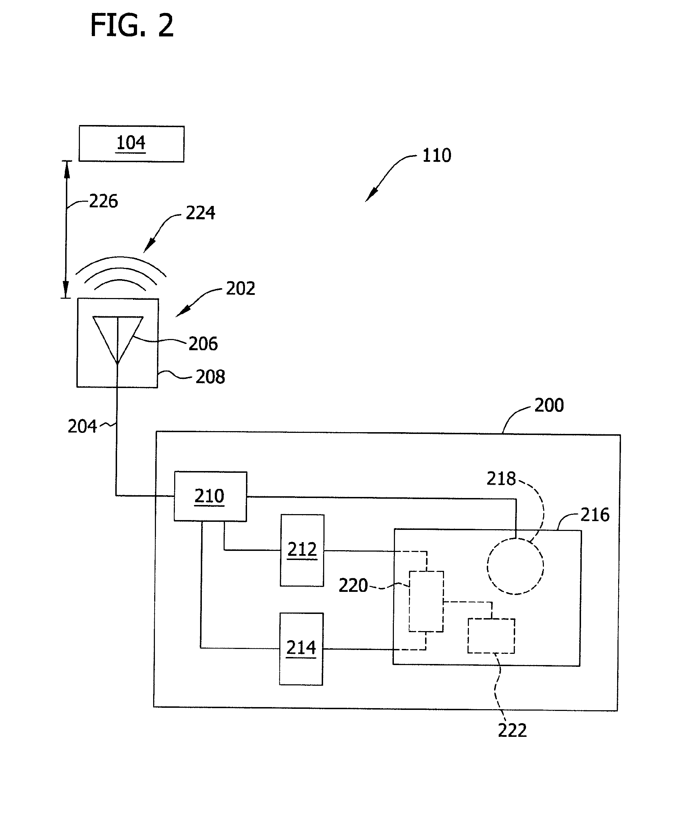

Fig. 2 is a schematic diagram of an exemplary sensor assembly 110 that may be used with power system 100 (shown in Fig. 1). In the exemplary embodiment, sensor assembly 110 includes a signal processing device 200 and a probe 202 that is coupled to signal processing device 200 via a data conduit 204. Moreover, in the exemplary embodiment, probe 202 includes an emitter 206 that is coupled to and/or positioned within a probe housing 208. More specifically, in the exemplary embodiment, probe 202 is a microwave sensor probe 202 that includes a microwave emitter 206. As such, in the exemplary embodiment, emitter 206 has at least one resonant frequency that is within a microwave frequency range.

In the exemplary embodiment, signal processing device 200 includes a directional coupling device 210 that is coupled to a transmission power detector 212, to a reception power detector 214, and to a signal conditioning device 216. Moreover, in the exemplary embodiment, signal conditioning device 216 includes a signal generator 218, a subtractor 220, and a linearizer 222. Emitter 206 emits an electromagnetic field 224 when a microwave signal is transmitted through emitter 206.

During operation, in the exemplary embodiment, signal generator 218 generates at least one electrical signal with a microwave frequency (hereinafter referred to as a "microwave signal") that is equal or approximately equal to at least one resonant frequency of emitter 206. Signal generator 218 transmits the microwave signal to directional coupling device 210. Directional coupling device 210 transmits a portion of the microwave signal to transmission power detector 212 and the remaining portion of the microwave signal to emitter 206. As the microwave signal is transmitted through emitter 206, electromagnetic field 224 is emitted from emitter 206 and out of probe housing 208. If an object, such as a drive shaft 104 or another component of machine 102 (shown in Fig. 1) and/or of power system 100 enters and/or changes a relative position within electromagnetic field 224, an electromagnetic coupling may occur between the object and field 224. More specifically, because of the presence of the object within electromagnetic field 224 and/or because of such object movement, electromagnetic field 224 may be disrupted, for example, because of an induction and/or capacitive effect induced within the object that may cause at least a portion of electromagnetic field 224 to be inductively and/or capacitively coupled to the object as an electrical current and/or charge. In such an instance, emitter 206 is detuned (i.e., a resonant frequency of emitter 206 is reduced and/or changed) and a loading is induced to emitter 206. The loading induced to emitter 206 causes a reflection of the microwave signal (hereinafter referred to as a "detuned loading signal") to be transmitted through data conduit 204 to directional coupling device 210. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object to emitter 206. Directional coupling device 210 transmits the detuned loading signal to reception power detector 214.

In the exemplary embodiment, reception power detector 214 determines an amount of power based on and/or contained within the detuned loading signal and transmits a signal representative of the detuned loading signal power to signal conditioning device 216. Moreover, transmission power detector 212 determines an amount of power based on and/or contained within the microwave signal and transmits a signal representative of the microwave signal power to signal conditioning device 216. In the exemplary embodiment, subtractor 220 receives the microwave signal power and the detuned loading signal power, and calculates a difference between the microwave signal power and the detuned loading signal power. Subtractor 220 transmits a signal representative of the calculated difference (hereinafter referred to as a "power difference signal") to linearizer 222. In the exemplary embodiment, an amplitude of the power difference signal is proportional, such as inversely or exponentially proportional, to a distance 226 defined between the object, such as drive shaft 104, within electromagnetic field 224 and probe 202 and/or emitter 206 (i.e., distance 226 is known as the object proximity). Depending on the characteristics of emitter 206, such as, for example, the geometry of emitter 206, the amplitude of the power difference signal may at least partially exhibit a non-linear relationship with respect to the object proximity.

In the exemplary embodiment, linearizer 222 transforms the power difference signal into a voltage output signal (i.e., the "proximity measurement signal") that exhibits a substantially linear relationship between the object proximity and the amplitude of the signal. Moreover, in the exemplary embodiment, linearizer 222 transmits the proximity measurement signal to diagnostic system 112 (shown in Fig. 1) with a scale factor that is suitable for processing and/or analysis within diagnostic system 112. In the exemplary embodiment, the proximity measurement signal has a scale factor of volts per millimeter. Alternatively, the proximity measurement signal may have any other scale factor that enables diagnostic system 112 and/or power system 100 to function as described herein.

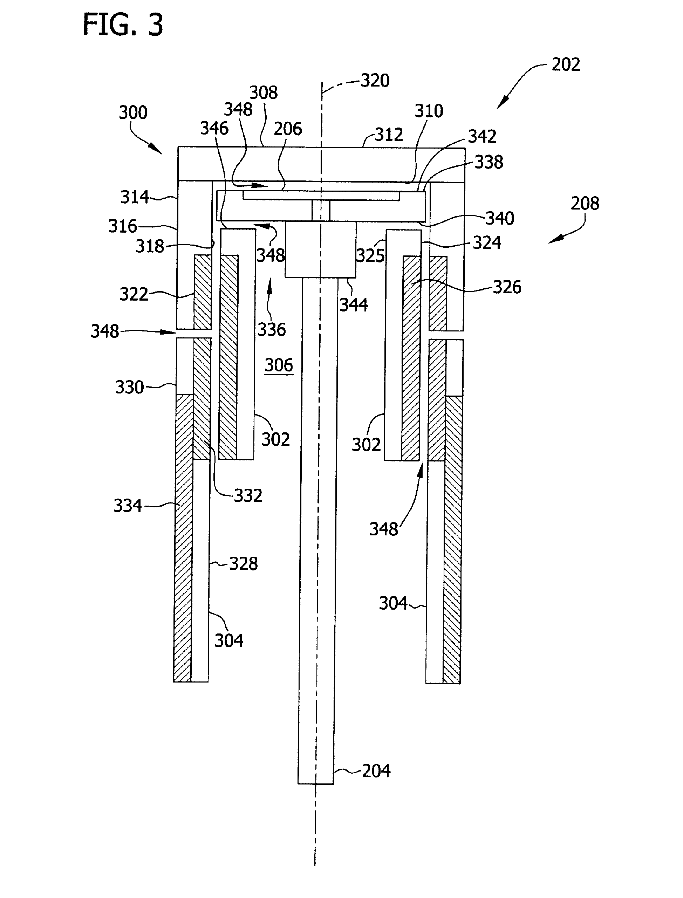

Fig. 3 is a cross-sectional view of probe 202 and probe housing 208. In the exemplary embodiment, probe housing 208 includes a probe cap 300, an inner sleeve 302, and an outer sleeve 304. A substantially cylindrical cavity 306 is at least partially defined by cap 300, inner sleeve 302, and outer sleeve 304. More specifically, probe cap 300, inner sleeve 302, and outer sleeve 304 are each substantially hollow such that cavity 306 is at least partially defined by probe cap 300, inner sleeve 302, and outer sleeve 304 when probe housing 208 is assembled.

In the exemplary embodiment, probe cap 300 includes a substantially cylindrical end wall 308 that has an upstream surface 310 and an opposing downstream surface 312. Probe cap 300 also includes a substantially annular sidewall 314 that circumscribes upstream surface 310. Sidewall 314 includes an outer surface 316 and an opposing inner surface 318 that at least partially defines cavity 306. In the exemplary embodiment, probe cap 300 is substantially symmetric with respect to a centerline axis 320 extending through probe housing 208 when probe housing 208 is assembled. More specifically, sidewall 314 is spaced substantially equidistantly about centerline axis 320.

In the exemplary embodiment, probe cap 300 includes a threaded portion 322 that circumscribes inner surface 318. Probe cap 300, in the exemplary embodiment, is manufactured from a polyketone material, such as polyether ether ketone (PEEK), and/or any other material and/or compound that enables probe cap 300 to be positioned within an industrial environment and/or within machine 102 without substantial degradation during operation of power system 100 (both shown in Fig. 1).

In the exemplary embodiment, inner sleeve 302 is annular and is sized to be at least partially received within probe cap 300. Inner sleeve 302 includes an outer surface 324 and an opposing inner surface 325. In the exemplary embodiment, inner sleeve 302 includes a threaded portion 326 that circumscribes outer surface 324. Threaded portion 326 cooperates with probe cap threaded portion 322 to enable probe cap 300 and inner sleeve 302 to be threadably coupled together. In the exemplary embodiment, inner sleeve 302 is manufactured from a substantially non-conductive material, such as a thermoplastic material or any other plastic material. As such, inner sleeve 302 facilitates electromagnetically isolating emitter 206 from outer sleeve 304 and/or from any portion of machine 102 that is adjacent to probe 202. Alternatively, inner sleeve 302 may be manufactured from any material and/or compound that enables probe 202 to function as described herein.

Outer sleeve 304, in the exemplary embodiment, is annular and is sized to at least partially receive inner sleeve 302 therein. Outer sleeve 304 includes an inner surface 328 and an opposing outer surface 330. In the exemplary embodiment, outer sleeve 304 includes an inner threaded portion 332 that circumscribes inner surface 328, and an outer threaded portion 334 that circumscribes outer surface 330. Inner threaded portion 332 cooperates with inner sleeve threaded portion 326 to enable inner sleeve 302 to be threadably coupled at least partially within outer sleeve 304. Outer threaded portion 334 is sized and shaped to cooperate with a threaded bore (not shown) formed within a machine, such as machine 102. As such, when probe 202 is assembled, probe 202 may be threadably coupled within machine 102, such that probe 202 is positioned proximate to a machine component to be measured and/or monitored. Alternatively, outer sleeve 304 may be fabricated substantially smoothly and/or may not include outer threaded portion 334 such that probe 202 and/or outer sleeve 304 may be coupled to machine 102 via one or more bolts, brackets, and/or any other coupling mechanism that enables power system 100 (shown in Fig. 1) to function as described herein.

In the exemplary embodiment, an emitter assembly 336 is positioned within probe housing 208 to form probe 202. More specifically, in the exemplary embodiment, within emitter assembly 336, emitter 206 is coupled to an emitter body 338. Emitter body 338 includes an upstream surface 340 and an opposing downstream surface 342. In the exemplary embodiment, emitter body 338 is a substantially planar printed circuit board (PCB), and emitter 206 includes one or more traces and/or other conduits (not shown) that are formed integrally with, and/or coupled to, emitter body downstream surface 342. Alternatively, emitter 206 and/or emitter body 338 may have any other construction and/or configuration that enables probe 202 to function as described herein. A coupling device 344 couples emitter body 338 and emitter 206 to a data conduit, such as to data conduit 204 for use in transmitting and receiving signals to and from signal processing device 200 (shown in Fig. 2). In the exemplary embodiment, coupling device 344 includes one or more bolts, brackets, welds, and/or any other coupling mechanism that enables emitter assembly 336 to function as described herein. Alternatively, data conduit 204 may be formed integrally with emitter 206, emitter body 338, and/or signal processing device 200.

In the exemplary embodiment, in operation, probe cap 300 is positioned such that downstream surface 312 faces the object being measured and/or monitored. As such, an electromagnetic field 224 (shown in Fig. 2) is generated by emitter 206, and field 224 extends outwardly from downstream surface 312.

During assembly, emitter assembly 336 is formed by coupling data conduit 204 to emitter body upstream surface 340 and to emitter 206 via coupling device 344. Emitter assembly 336 is positioned at least partially within probe cap 300. More specifically, emitter body 338 is positioned within cavity 306 such that emitter body downstream surface 342 and emitter 206 face end wall upstream surface 310. Inner sleeve 302 is inserted within cavity 306 and is positioned about data conduit 204. Moreover, inner sleeve 302 is threadably coupled to probe cap 300 via threaded portions 326 and 322. As inner sleeve 302 is threadably coupled to probe cap 300, an annular edge 346 of inner sleeve 302 contacts emitter body upstream surface 340 and urges downstream surface 342 of emitter body 338 into contact with end wall upstream surface 310. Threaded portions 322 and 326 cooperate to enable inner sleeve 302 to maintain emitter body 338 in contact with end wall 308 during operation of probe 202.

Outer sleeve 304 is threadably coupled to inner sleeve 302 such that outer sleeve 304 at least partially encloses inner sleeve 302. More specifically, when probe 202 is assembled, probe cap 300 and outer sleeve 304 enclose inner sleeve 302. Moreover, probe cap 300, outer sleeve 304, and inner sleeve 302 enclose at least a portion of data conduit 204. As such, in the assembled state, probe housing 208 substantially seals cavity 306 to facilitate protecting emitter 206 from damage. While one or more gaps 348 may be illustrated in Fig. 3 as being defined between probe cap 300, inner sleeve 302, outer sleeve 304, and/or emitter body 338, it should be recognized that after probe 202 is fully assembled, probe cap 300, inner sleeve 302, outer sleeve 304, and/or emitter body 338 are coupled together to form a probe 202 that is substantially sealed from an external environment. In one embodiment, cavity 306 may be filled with an epoxy material and/or with any other material to substantially seal cavity 306 and/or probe 202 from the external environment and/or to facilitate coupling the components of probe 202 together. In another embodiment, a seal (not shown) may be coupled to data conduit 204, to inner sleeve 302, to outer sleeve 304, and/or to any other component of probe 202 to substantially seal cavity 306 and/or probe 202 from the external environment and/or to facilitate coupling the components together. In the exemplary embodiment, after assembly, probe 202 is coupled to signal processing device 200 via data conduit 204.

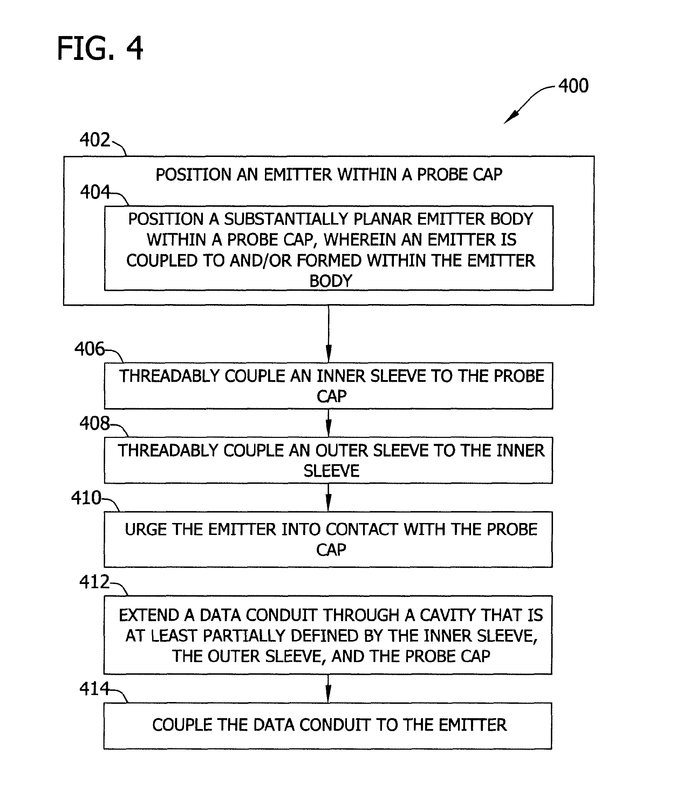

Fig. 4 is a flow diagram of an exemplary method 400 of assembling a microwave sensor probe, such as probe 202 (shown in Fig. 2). In the exemplary embodiment, an emitter is positioned 402 within a probe cap. Moreover, in the exemplary embodiment, the emitter is configured to generate an electromagnetic field from at least one microwave signal received by the emitter. More specifically, in the exemplary embodiment, positioning 402 an emitter within a probe cap includes positioning 404 a substantially planar emitter body within the probe cap, wherein an emitter is coupled to and/or formed within the emitter body.

An inner sleeve is threadably coupled 406 to the probe cap, and an outer sleeve is threadably coupled 408 to the inner sleeve. As the inner sleeve is coupled 406 to the probe cap, the inner sleeve urges 410 the emitter into contact with the probe cap. In the exemplary embodiment, the inner sleeve, the outer sleeve, and the probe cap are substantially hollow such that a cavity is at least partially defined by the inner sleeve, the outer sleeve, and the probe cap. A data conduit is extended 412 through the inner sleeve, through the outer sleeve, and through at least a portion of the probe cap (i.e., through the cavity), and the data conduit is coupled 414 to the emitter. In the exemplary embodiment, the data conduit is configured to transmit at least one microwave signal to the emitter to enable the emitter to generate an electromagnetic field. The microwave probe measures a proximity of an object, such as a machine component, relative to the emitter, as described more fully above.

As compared to known probes, the exemplary probe described herein may be manufactured and/or assembled in a cost-effective and reliable manner. The probe cap, inner sleeve, outer sleeve, and emitter assembly may be manufactured separately. As such, machinery used to manufacture the probe described herein may be reduced in complexity and/or cost. Moreover, the exemplary probe described herein may be quickly and easily assembled and installed in a machine with minimal tools. If a component of the probe is faulty or is damaged, the probe may be disassembled and the component may be replaced, in contrast with known probes that are fabricated as a single component. As such, the probe described herein facilitates reducing a cost and a complexity of a sensor assembly and a power system that use the probe.

Exemplary embodiments of a sensor assembly and methods for assembling a sensor probe are described above in detail. The methods and sensor assembly are not limited to the specific embodiments described herein, but rather, components of the sensor assembly and/or steps of the methods may be utilized independently and separately from other components and/or steps described herein. For example, the sensor assembly may also be used in combination with other measuring systems and methods, and is not limited to practice with only the power system as described herein. Rather, the exemplary embodiment can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defmed by the following numbered clauses:
1. A method of assembling a sensor probe, said method comprising:
   positioning an emitter within a probe cap, wherein the emitter is configured to generate an electromagnetic field from at least one microwave signal;
   coupling an inner sleeve to the probe cap; and
   coupling an outer sleeve to the inner sleeve.
2. A method in accordance with Clause 1, wherein coupling an inner sleeve to the probe cap comprises threadably coupling the inner sleeve to the probe cap.
3. A method in accordance with any preceding Clause, wherein threadably coupling the inner sleeve to the probe cap urges the emitter into contact with the probe cap.
4. A method in accordance with any preceding Clause, wherein coupling the outer sleeve to the inner sleeve comprises threadably coupling the outer sleeve to the inner sleeve.
5. A method in accordance with any preceding Clause, wherein positioning an emitter within a probe cap comprises positioning a substantially planar emitter body within the probe cap, wherein the emitter is coupled to the emitter body.
6. A method in accordance with any preceding Clause, further comprising coupling a data conduit to the emitter, wherein the data conduit is configured to transmit the at least one microwave signal to the emitter.
7. A method in accordance with any preceding Clause, wherein each of the inner sleeve, the outer sleeve, and the probe cap are substantially hollow, and wherein coupling a data conduit to the emitter comprises extending the data conduit through the outer sleeve, the inner sleeve, and at least a portion of the probe cap to couple the data conduit to the emitter.
8. A sensor probe comprising:
   an emitter configured to generate an electromagnetic field from at least one microwave signal;
   a probe cap sized to receive said emitter;
   an inner sleeve coupled to said probe cap; and
   an outer sleeve coupled to said inner sleeve.
9. A sensor probe in accordance with any preceding Clause, wherein said inner sleeve is threadably coupled to said probe cap.
10. A sensor probe in accordance with any preceding Clause, said emitter is urged into contact with said probe cap by said inner sleeve.
11. A sensor probe in accordance with any preceding Clause, wherein said inner sleeve is threadably coupled to said outer sleeve.
12. A sensor probe in accordance with any preceding Clause, wherein said emitter is coupled to a substantially planar emitter body.
13. A sensor probe in accordance with any preceding Clause, further comprising a data conduit coupled to said emitter, wherein said data conduit is configured to transmit the at least one microwave signal to said emitter.
14. A sensor probe in accordance with any preceding Clause, wherein each of said inner sleeve, said outer sleeve, and said probe cap are substantially hollow, said data conduit extends through said outer sleeve, said inner sleeve, and at least a portion of said probe cap.
15. A sensor probe in accordance with any preceding Clause, wherein said inner sleeve is manufactured from a non-conductive material to facilitate electromagnetically isolating said emitter from said outer sleeve.
16. A sensor assembly comprising:
   at least one probe comprising:
      an emitter configured to generate an electromagnetic field from at least one microwave signal;
      a probe cap sized to receive said emitter;
      an inner sleeve coupled to said probe cap; and
      an outer sleeve coupled to said inner sleeve; and
      a signal processing device coupled to said at least one probe, said signal processing device configured to generate a proximity measurement based on a loading induced to said emitter.
17. A sensor assembly in accordance with any preceding Clause, wherein said inner sleeve is threadably coupled to said probe cap.
18. A sensor assembly in accordance with any preceding Clause, wherein said emitter is urged into contact with said probe cap by said inner sleeve.
19. A sensor assembly in accordance with any preceding Clause, wherein said inner sleeve is threadably coupled to said outer sleeve.
20. A sensor assembly in accordance with any preceding Clause, wherein said inner sleeve is manufactured from a non-conductive material to facilitate electromagnetically isolating said emitter from said outer sleeve when said emitter is positioned within said probe cap.

## Claims

1. A method (400) of assembling a sensor probe, said method comprising:
positioning (402) an emitter within a probe cap, wherein the emitter is configured to generate an electromagnetic field from at least one microwave signal;
coupling (406) an inner sleeve to the probe cap; and
coupling (408) an outer sleeve to the inner sleeve.

2. A method (400) in accordance with Claim 1, wherein coupling (406) an inner sleeve to the probe cap comprises threadably coupling the inner sleeve to the probe cap.

3. A method (400) in accordance with Claim 2, wherein threadably coupling (406) the inner sleeve to the probe cap urges the emitter into contact with the probe cap.

4. A method (400) in accordance with any preceding Claim, wherein coupling (408) the outer sleeve to the inner sleeve comprises threadably coupling the outer sleeve to the inner sleeve.

5. A method (400) in accordance with any preceding Claim, wherein positioning (402) an emitter within a probe cap comprises positioning (404) a substantially planar emitter body within the probe cap, wherein the emitter is coupled to the emitter body.

6. A method (400) in accordance with any preceding Claim, further comprising coupling (414) a data conduit to the emitter, wherein the data conduit is configured to transmit the at least one microwave signal to the emitter.

7. A method (400) in accordance with Claim 6, wherein each of the inner sleeve, the outer sleeve, and the probe cap are substantially hollow, and wherein coupling (414) a data conduit to the emitter comprises extending (412) the data conduit through the outer sleeve, the inner sleeve, and at least a portion of the probe cap to couple the data conduit to the emitter.

8. A sensor probe (202) comprising:
an emitter (206) configured to generate an electromagnetic field from at least one microwave signal;
a probe cap (300) sized to receive said emitter;
an inner sleeve (302) coupled to said probe cap; and
an outer sleeve (304) coupled to said inner sleeve.

9. A sensor probe (202) in accordance with Claim 8, wherein said inner sleeve (302) is threadably coupled to said probe cap (300).

10. A sensor probe (202) in accordance with Claim 8 or Claim 9, said emitter (206) is urged into contact with said probe cap (300) by said inner sleeve (302).
